# EUROPEAN PATENT APPLICATION

(11) **EP 0 939 237 A2**
(43) Date of publication of application: **01.09.1999**
(21) Application number: 99200412.7
(22) Date of filing: 12.02.1999
(51) Int. Cl.: F16C 1/26

(54) **Fast locking anti-rotation device in a remote control apparatus**

(30) Priority: 25.02.1998 IT MI980369
(71) Applicant: Mondial Trade Agency Limited, Floriana Vlt. 15 (MT)
(72) Inventor: Alkan,Yenal, Kadikoy, Istanbul (TR)
(74) Representative: De Gregori, Antonella

(57) **Abstract**

A fast locking anti-rotation device in a remote control apparatus which comprises a lever (13) suitable to be connected to at least one end of at least one trailing cable (14), said lever can oscillate with respect to a box-shaped element (11, 111) that can be connected to an outer structure of a driving machine, wherein the box-shaped element is provided with at least one opening (23) for the passage of at least one cable (14) and the positioning of a reaction sheath (15), both fitted in a holding sleeve (26) that is provided with the projecting bayonet locking elements (24, 25, 28) on its outer surface, said elements can be inserted and removed through rotation into the opening (23) which has engaging elements (27, 30), which retain the bayonet locking elements, furthermore at least one anti-rotation element (32, 132, 232) of said holding sleeve (26) is provided and is firmly positioned with respect to the box-shaped element (11, 111) and to the opening (23) and to at least one flat surface (35) formed on the holding sleeve (26).

## Description

The present invention refers to a fast locking anti-rotation device in a remote control apparatus.

In the known devices for remote controls using one or more cables, it is normal that, for the cable assembly, the end of the cable must be inserted into the corresponding opening of a box for its positioning with respect to a control lever or alike in the connecting and disconnecting stages. This is necessary to enable the insertion of the cable into its reaction seat, so as to obtain and to allow the correct and required operation of the entire remote control apparatus.

Presently, such positioning of traditional remote controls, as shown in European patent 285299, is a little difficult since particular attention must be paid to the correct positioning of a holding sleeve that surrounds an initial portion of the cables and of the sleeve and also to the positioning of the cover and of its element that locks the holding sleeve. Moreover, it must be certain that the interactive parts are correctly placed and restrained.

Nowadays, new remote controls for single or multiple trailing cables are being proposed, said controls can have a fast locking device that eliminates the majority of the problems stated above.

In these remote control devices, the box-shaped element or box element of the control lever has at least one opening for the passage of at least one cable and the positioning of the reaction sheath.

Both the cable or cables and the sheath are contained in a holding sleeve which, according to the new configuration, is provided, on its outer surface, with projecting bayonet locking elements, which can be inserted, in a removable way, into said opening through rotation. Naturally, the opening comprises engaging elements suitable to collaborate with the projecting elements of the holding sleeve so as to realise the required positioning.

Therefore, it is easy to understand that in general the positioning takes place when such an insertion allows the projecting parts of the holding sleeve to be inserted into the hollow extensions of the opening and, once the insertion is completed, the subsequent rotation of the holding sleeve, so as to realise a firm locking between the parts.

Such insertion by rotation, in the case where the remote control device is placed on machines subjected to vibrations, can rotate and return to the free deployment and release position so that the control is no longer firmly positioned. Moreover, it may also occur that an operator inadvertently operates on the holding sleeve, rotating it and bringing it into the box release position.

Therefore, a purpose of the present invention is to solve the problem of the firm positioning between the parts, notwithstanding any accidental actions or any vibration caused to the remote control device; this is in order to guarantee a constant correct positioning of the cable or of the cables in the control lever box or in the remote control box-shaped element.

Another purpose of this invention is to facilitate the insertion of the cable reaction holding sleeve into the box or in the box-shaped element, whether it is inserted from the outside or from the inside of the box or of the box-shaped element, and whether there is the presence of one or more cables.

These purposes, according to the present invention, are achieved by a fast locking anti-rotation device in a remote control apparatus as claimed in claim 1. Moreover, further characteristics of the present invention are defined in the following claims.

The characteristics and advantages of a fast locking anti-rotation device in a remote control apparatus, according to the present invention, will be made more evident from the following description of a non limiting example which refers to the attached schematic drawings, in which:
- Figure 1 is a cross section elevation view of a device according to the present invention in a remote control lever box with a holding sleeve which contains a control cable, said lever is inserted in a corresponding opening and is firmly positioned, wherein a cover anti-rotation element is indicated by a broken line in an exploded way,
- Figure 2 is a cross section view along the lines II-II of figure 1, with some elements seen in top view,
- Figure 3 is a front view in accordance with arrow III of figure 1,
- Figure 4 is a lateral elevation view of a detail in accordance with arrow IV of figure 3,
- Figure 5 is a section elevation view, obtained in accordance with arrow V-V of figure 6, of a remote control box-shaped element into which a couple of sleeves, similar to those of figure 1, are inserted in the relative seats with only one locking element for both of them,
- Figure 6 is a bottom plan view in accordance with arrow VI of figure 5, without the control elements,
- Figure 7 shows a perspective view of the locking element of figure 5,
- Figure 8 is a section elevation view, in accordance with line VIII-VIII of figure 9, of a detail of a remote control box-shaped element wherein a sleeve is inserted, which is similar to the preceding ones and which is inserted in the relevant seat with the relative single locking element,
- Figure 9 is a top plan view in accordance with arrow IX of figure 8 in which there is the complete box-shaped element and the two sleeves,
- Figure 10 shows a perspective view of the locking element of figure 8.

First with reference to the figures, a fast locking remote control device, driven by means of single or multiple trailing cables with an anti-rotation device, is shown in accordance with the present invention.

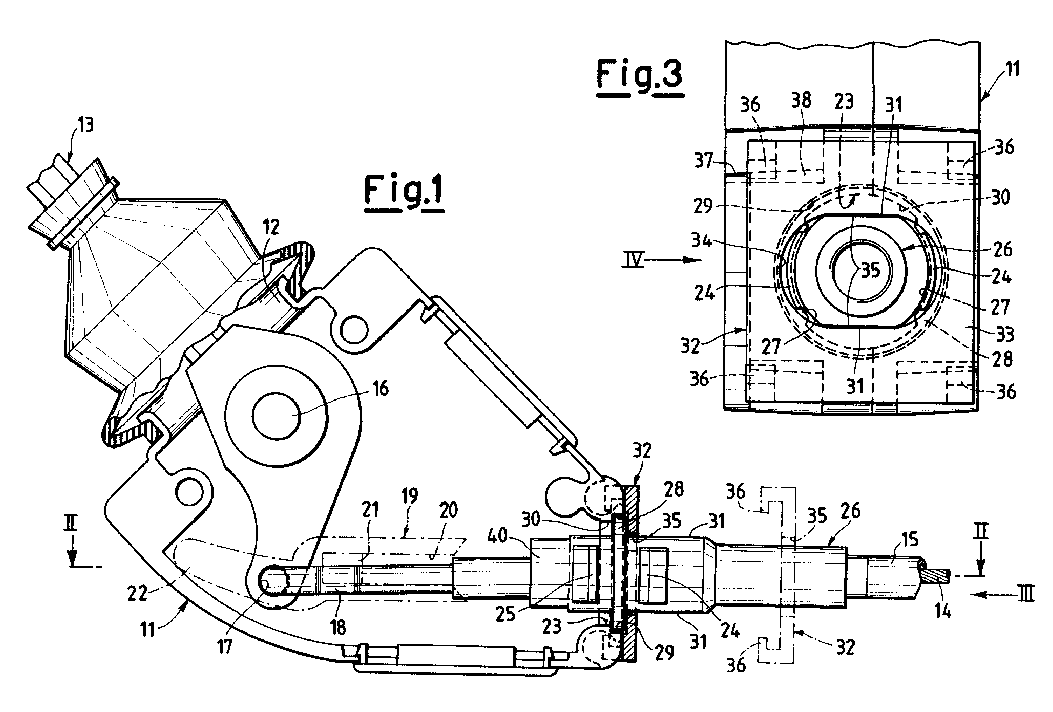

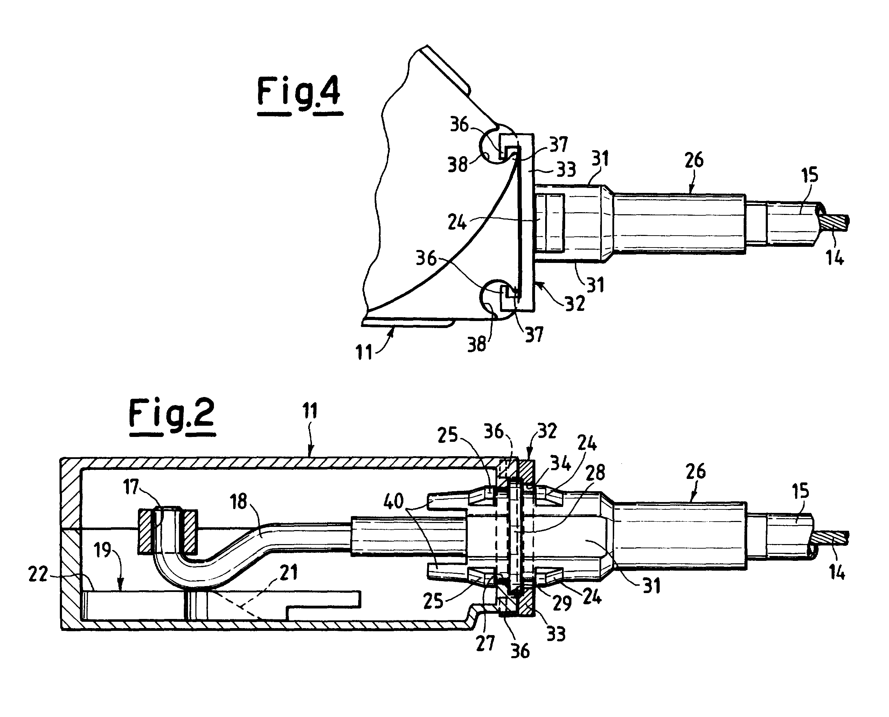

Figures 1-4 illustrate a box-shaped element or box 11, for example in two joined pieces, which can be connected to a driving machine outer structure. The box 11 comprises a first opening 12 wherefrom the control lever 13 of a single cable core 14 extends, said cable can be moved inside a reaction sheath 15.

The control lever 13 can oscillate around a pivot 16, which can be integral with the box 11, and has a hole 17 at one of its inner end suitable to receive the hook shaped curved end 18 of the cable core 14. It is possible to point out, in one half of the box 11, an enlargement 19 that is placed underneath the hook shaped curved end 18. In particular such an enlargement 19 has a centrally hollow initial portion 20, into which the curved end 18 is inserted before reaching the slanting ramp 21 towards a subsequent upper end 22 of the same enlargement 19.

This enlargement 19 has, at least in part, a curved shape that follows the oscillations of the hole 17 of the control lever 13. In this way, the secure engagement of the curved end 18 in the hole 17, for small oscillations of the lever, is guaranteed.

Furthermore, there is the significant characteristic of providing a specific fast locking and unlocking sleeve 26 which can be positioned inside a corresponding opening 23 of the box 11. It must be noted that this opening 23 is positioned in an area of the box which is normally known as the reaction area for realising the remote transmission.

The fast locking/unlocking sleeve is centrally provided with a shaped through passing cavity (not shown) which allows the passage of cable 14 that maintains its continuity through folded seams of at least two portions, not shown in the figures, with the curved end 18.

This holding sleeve 26, which also has a support function, can be inserted, in a removable way, in the opening 23, thanks to two couples of teeth 24 and 25, which radially project outwardly from the body of the holding sleeve 26. Each of the teeth 24 and 25 occupies a circular portion of the casing ( e.g. a little under a quarter of the perimeter) and the teeth are placed on opposite sides with respects to an annular crown 28.

This annular crown 28, also radially projecting outwardly from the body of the holding sleeve 26, abuts against the body of the box 11 near the opening 23 and is distanced from the teeth 24 and 25 of a length equal to at least the thickness of the wall of the base box-shaped element 11.

Furthermore, the opening 23 generally has two circular portions 27 with a diameter a little larger than that of the holding sleeve 26 and two enlarged or expanded areas 30 in the opening 23 into which the couples of teeth 24 and 25 can be inserted. Further, an annular cavity 29 is provided to the opening 23 and said cavity receives and houses, at least partially, the thickness of the annular crown 28.

The thickness of the box wall wherein the opening 23 is realised must be such that said wall can be inserted, when the sleeve 26 is rotated, between the teeth 24 or 25 and the annular crown 28 thus causing a firm locking of the sleeve through a coupling similar to that of a bayonet (figures 1-3).

In accordance with this invention, two flat surfaces 31 are obtained on the lateral surface of the holding sleeve 26, which in the example are two flat milled surfaces on opposite sides.

Further, an anti-rotation element 32 is also provided, said element can be connected to the holding sleeve 26, in the form of a cover plate.

This anti-rotation element 32 comprises a plate 33 with a central hole in an oval opening 34 with two flat portions 35. These flat portions 35 firmly abut, once the anti-rotation element is coupled to the box 11, against the flat surfaces 31.

Four hook shaped curved extensions 36 are provided on the sides almost in correspondence with the edges of the cover element 32, said extensions abut against the complementary projecting appendixes 37 obtained within the cavities 38 of the box 11 and provided in the opening 23 area.

Such positioning can be realised either by snapping or by a side movement of the cover element 32 which is positioned on the box 11 thanks to a suitable eccentric eyelet of the opening 34.

The flat portions 35, by abutting on the flat surfaces 31 of the holding sleeve 26, realise an engagement that prevents any rotation, even accidental, of the holding sleeve 26 which is inserted in the opening 23 of the box.

In this way, it is certain that the curved end 18 of the remote control remains, during its control oscillations, above the upper end 22 of the enlargement 19. It is therefore prevented any accidental slipping between the lever hole 17 and said curved end 18 of the remote control apparatus.

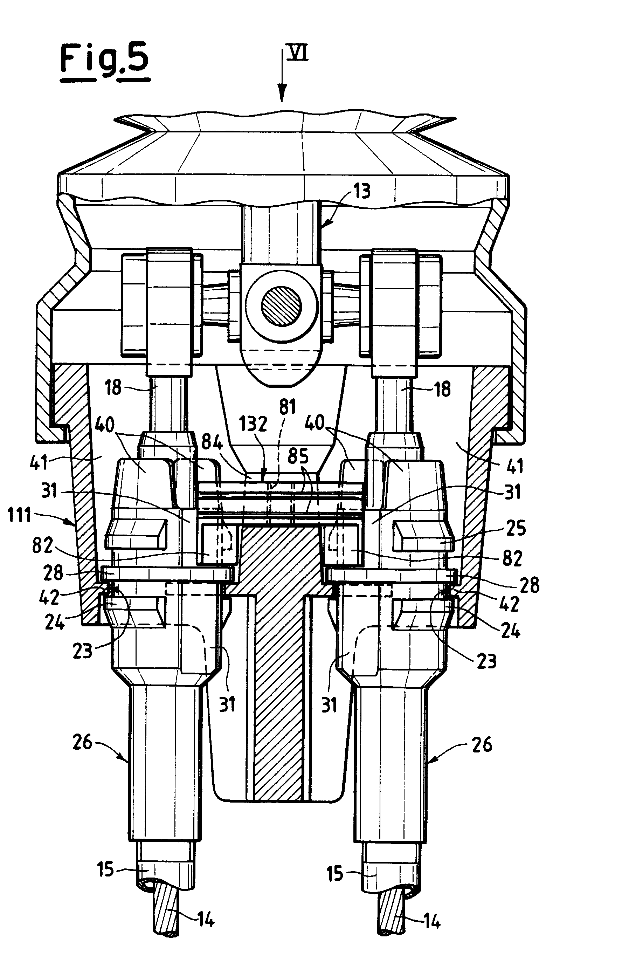

Figures 5-7 show a second possible embodiment of the present invention wherein, when possible, equal reference numbers indicate equal or similar elements.

In the second example, the box is replaced by a box-shaped element 111 in which there are two cavities 41 divided into two portions by the flanges 42 provided with the openings 23 similar to those previously described.

Figure 5 shows a fast locking device of a remote control obtained by means of two trailing cables 14 with corresponding sheaths 15, said cables are connected, by known means, to a lever 13, through a specific coupling. Equal elements are indicated with equal elements.

Furthermore, it should be noted that the end of the holding sleeve 26 facing the control lever 13 is provided with two appendixes 40 which are placed at opposite sides along the same generating line of the two couples of teeth 24 and 25 and which project outwardly.

The presence of these appendixes 40 on the holding sleeve 26 allows the control of the transversal movements of the cable 14, by limiting the movement and therefore any possible clearance, without however stopping the longitudinal oscillation movement of the control lever.

According to the present invention, each of the two holding sleeves 26 has at least one flat surface 31, which is realised for example through a flat milling operation at least on its lateral surface facing the control lever.

Furthermore, an anti-rotation element 132 has been realised, which can be coupled to the two holding sleeves 26, in the form of an additional element which can be inserted into the box-shaped element 111, always on the side towards the control lever.

This additional anti-rotation element 132 is formed by a U-shaped element comprising a central body 80, which has a isosceles trapezium shaped section, and which is provided with a threaded hole 81 suitable to receive a positioning threaded element, which is not shown.

Two legs 82 extend from said central body 80 on the slanting lateral sides of the trapezium section so as to continue an outer surface of the two slanting sides of the central body 80. In this way, two slanting surfaces 83 are realised that abut against the flat surfaces 31 of the two holding sleeves 26 thus locking said sleeves into position and preventing the backward rotation and the slipping from the openings 23 of the box-shaped element 111.

To help the firm positioning of this additional anti-rotation element 132 on the sides of the two holding sleeves 26, the central body 80 is fitted into a hollow seat 84 obtained in the box-shaped element 111. Moreover, on one of its base surfaces, e.g. the one with larger dimensions, the central body 80 has two small projections 85 that protrude and cause its forced insertion into the hollow seat 84 with a final firm positioning as a result.

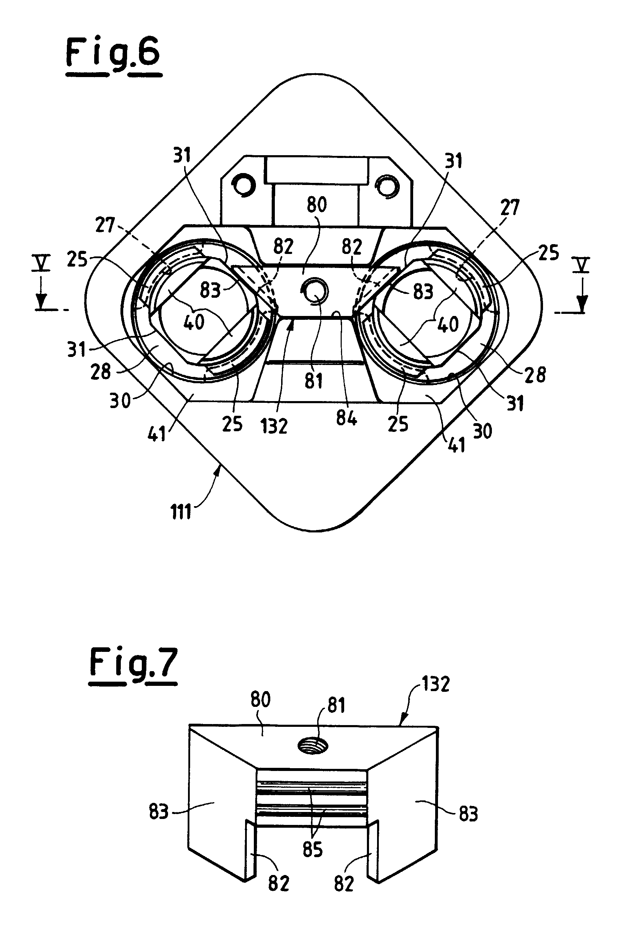

Figure 7 shows more clearly how this additional anti-rotation element 132 is realised with a central body 80, provided with projections 85 and with lateral legs 82, and with slanting lateral flat surfaces 83 for the engagement with the flat surfaces 31 of the holding sleeves 26.

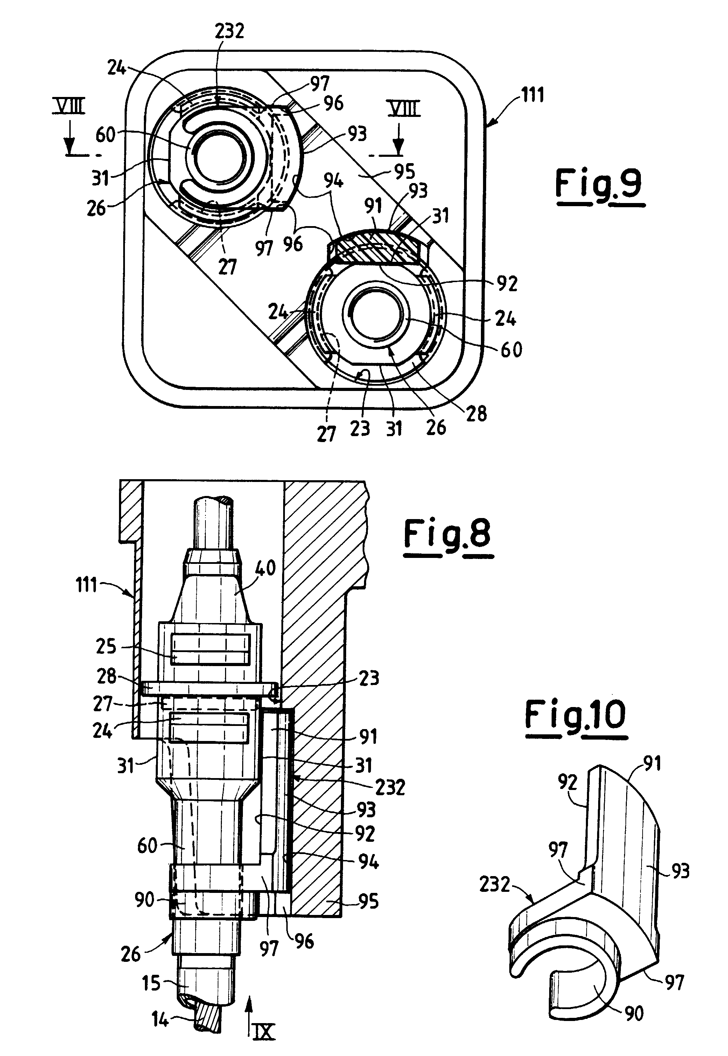

Figures 8-10 show a further third embodiment of the present invention.

In this different example, an anti-rotation element 232 is provided for each of the two holding sleeves 26, in the form of an additional element which can be put together with each of the two sleeves inside a box-shaped element 111, similar to the preceding one.

Every anti-rotation element 232 has a C-shaped upper area 90 that works as a ring and is suitable to fit on a hollow cylindrical extension 60 of the holding sleeve 26, that projects opposite to the areas provided with the appendixes 40. A leg 91 extends from said upper area 90 and has a flat surface 92 on one side and a rounded surface 93 on the other side.

The rounded side 93 of the leg 91 is suitable to fit into a complementary cavity 94, provided with a side ledge 96, obtained in a central portion 95 of the box-shaped element 111.

One of the two sides 97 of the anti-rotation element 232 engages with the side ledge 96 of the cavity 94. Moreover, the flat surface 92 engages with the flat surface 31 obtained on the holding sleeve 26.

In this way, a locking between the parts is realised. For greater security, it is possible to provide the outer surface of the hollow cylindrical extension 60 of the holding sleeve 26 or the inner surface of the C-shaped upper area 90 with knurls, not shown, that cause a firm engagement and avoid any rotation.

In this third example, it is therefore evident how it is possible to insert an anti-rotation element for each sleeve which carries a remote control cable in a box-shaped element of a remote control with multiple transmission cables.

Therefore, the present invention allows, in a bayonet locking system applied to a remote control apparatus through trailing cables (in particular push-pull cables), a secure and firm locking into seat.

Moreover, the various possibilities of choice for an additional element will prevent the rotation and the slipping of the reaction sleeve of the control device, whatever direction the sleeve is inserted into the holding box-shaped element and for whatever number of control cables.

## Claims

1. A fast locking anti-rotation device in a remote control apparatus which comprises a lever (13) suitable to be connected to at least one end of at least one trailing cable (14), said lever can oscillate with respect to a box-shaped element (11, 111) that can be connected to an outer structure of a driving machine, wherein the box-shaped element is provided with at least one opening (23) for the passage of at least one said cable (14) and the positioning of a reaction sheath (15), both fitted in a holding sleeve (26) that is provided with the projecting bayonet locking elements (24, 25, 28) on its outer surface, said elements can be inserted and removed through rotation into said opening (23) which has engaging elements (27, 30), which retain the bayonet locking elements, characterised by providing at least one anti-rotation element (32, 132, 232) of said holding sleeve (26) firmly positioned with respect to the box-shaped element (11, 111) and to said opening (23) and to at least one flat surface (35) formed on said holding sleeve (26).

2. Device as claimed in claim 1, characterised in that said anti-rotation element of said holding sleeve (26) comprises a cover plate element (32), which has a hole in a oval portion (34), with at least one flat portion (35) that firmly abuts on at least one said flat surface (31) formed on said holding sleeve (26), when said anti-rotation element is coupled to said box-shaped element (11) in correspondence with said opening (23).

3. Device as claimed in claim 2, characterised in that said cover plate (32) has curved extensions (36) that abut on the appendixes (37) formed on the outer portion of said box-shaped element (11) in proximity to said opening (23).

4. Device as claimed in claim 1, characterised in that said anti-rotation element of said holding sleeve comprises an additional element (132, 232), provided with at least one flat surface (83, 92) suitable to engage against at least one said flat surface (31) formed on said holding sleeve (26), which can be inserted in such a way that it does not rotate in a hollow seat (84, 94) of said box-shaped element (111).

5. Device as claimed in claim 4, characterised in that said additional element (132) is formed by a U-shaped element comprising a central body (80), wherefrom two legs extend (82), which are placed on the slanting lateral sides of said body and are provided with two slanting surfaces (83) that abut against two flat surfaces (31) of said holding sleeves (26).

6. Device as claimed in claim 5, characterised in that said central body (80) has an isosceles trapezium shaped section and a threaded hole (81) suitable to receive a threaded positioning element.

7. Device as claimed in claim 5, characterised in that said central body (80) has, on at least one of its faces, projections (85) that protrude and that cause its forced insertion in said hollow seat (84, 94).

8. Device as claimed in claim 4, characterised in that said additional element (232) can be connected to a single holding sleeve (26) and is provided with a C-shaped area (90), that fits on a hollow cylindrical extension (60) of said holding sleeve (26), and with one leg (91) provided, on one side, with a flat surface (92) that abuts against said flat surface (31) of said holding sleeve, and said leg (91) is inserted in a cavity (94) of said box-shaped element (111).

9. Device as claimed in claim 8, characterised in that said leg (91) is also provided with a rounded surface (93) complementary to that of said cavity (94).

10. Device as claimed in claim 9, characterised in that said cavity (94) has a side ledge (96) that abuts against a side (97) of said anti-rotation element (232).
